# FASCICULE DE BREVET EUROPEEN

(11) **EP 3 303 243 B1**
(45) Date de publication et mention de la délivrance du brevet: **18.09.2019**
(21) Numéro de dépôt: 16734419.1
(22) Date de dépôt: 31.05.2016
(51) Int. Cl.: C03C 17/36, C03C 17/38, G02B 1/14, G02B 5/08

(54) **MIROIR Á DURABILITÉ AMÉLIORÉE**
SPIEGEL MIT VERBESSERTER HALTBARKEIT
MIRROR WITH IMPROVED DURABILITY

(30) Priorité: 02.06.2015 FR 1555007
(43) Date de publication de la demande: 11.04.2018
(73) Titulaire: Saint-Gobain Glass France, 92400 Courbevoie (FR)
(72) Inventeur: LEQUIPPE, Guillaume, 60200 Compiegne (FR)
(74) Mandataire: Saint-Gobain Recherche
(86) Numéro de dépôt international: PCT/FR2016/051296
(87) Numéro de publication internationale: WO 2016/193611

(56) Documents cités:
- EP-A1- 2 377 904
- EP-A1- 2 555 021
- WO-A1-2006/121517
- WO-A1-2010/037867
- WO-A1-2014/157355
- FR-A1- 2 719 839
- FR-A1- 2 936 240
- US-A- 4 745 003
- US-A1- 2007 205 395
- , 2 mars 2016 (2016-03-02), XP055254779, Extrait de l'Internet: URL:https://fr.wikipedia.org/w/index.php?t itle=Spécial:Livre&bookcmd=download&collec tion_id=685705a3bf1a195eafe2fb495e11ed7c19 6ceff5&writer=rdf2latex&return_to=Polyrota xane [extrait le 2016-03-02]
- Polyrotaxane: "Polyrotaxane-based paint", , 2 mars 2016 (2016-03-02), XP055254787, Extrait de l'Internet: URL:https://en.wikipedia.org/w/index.php?t itle=Special:Book&bookcmd=download&collect ion_id=09be0499a0c6917f13aa1b4f88d88ea9058 d910f&writer=rdf2latex&return_to=Polyrotax ane-based paint [extrait le 2016-03-02]

## Description

L'invention concerne un miroir possédant une durabilité améliorée, ainsi que son procédé de fabrication. Les miroirs comprennent généralement un substrat en verre sur lequel a été déposée une couche réfléchissante métallique. Cette couche réfléchissante est le plus souvent en argent ou en aluminium et a tendance à se corroder à l'air ambiant en raison de la présence de polluants présents dans l'atmosphère. Il est par conséquent indispensable de la protéger pour augmenter la durabilité des miroirs. Dans les miroirs à l'argent, un traitement à l'étain est souvent réalisé après l'argenture, en vue d'une part de promouvoir l'adhésion des couches supérieures et d'autre part d'améliorer potentiellement la résistance à la corrosion de l'argent. Une ou plusieurs couches protectrices, par exemple à base de cuivre ou à base de peintures, sont ensuite déposées sur le substrat argenté. On peut citer par exemple la demande de brevet FR 2 936 340 qui décrit un miroir comprenant un revêtement de protection combinant deux couches successives de peintures de type différent. Ces peintures peuvent être de type organique ou de type inorganique, solvantées ou aqueuses. Typiquement, l'épaisseur totale de cette couche protectrice de peinture une fois sèche est environ de 50 µm. Cette épaisseur permet notamment d'assurer la protection contre la corrosion et donc améliore la durabilité du miroir. La peinture permet également d'obtenir l'opacité en face arrière du miroir, recherchée notamment pour les miroirs d'intérieurs. Le choix ou développement des peintures et des procédés de fabrication des miroirs permettent de garantir une protection contre la corrosion répondant aux seuils imposés par la norme européenne EN ISO 1036. Les miroirs obtenus ont notamment des valeurs acceptables lors des tests réalisés en milieu salin cupro-acétique (également connu sous le nom de test CASS ou du brouillard Salin Cupro Acétique décrit dans la norme EN ISO 9227). Toutefois, on cherche à améliorer encore la durabilité des miroirs, spécialement dans des conditions réelles de sollicitations chimiques, notamment en présence de corrosion sulfurante et/ou de corrosion aux chlorures, tout en maintenant des coûts de production comparables aux solutions actuellement sur le marché.

C'est dans ce cadre que s'inscrit la présente invention. Les inventeurs ont découvert de façon surprenante qu'il était possible d'améliorer très nettement la durabilité des miroirs et en particulier leur résistance à la corrosion aux sulfures et aux chlorures en déposant une surcouche de faible épaisseur directement sur la couche protectrice de peinture, permettant ainsi de rendre cette dernière plus compacte en refermant la porosité ouverte ou débouchante en surface.

La présente invention porte sur un miroir comprenant un substrat transparent en verre, au moins une couche réfléchissante métallique et au moins une couche protectrice en peinture au dos du miroir, ledit miroir comprenant une surcouche barrière aux éléments corrosifs, tels que les sulfures et/ou les chlorures d'une épaisseur inférieure à 6 µm et située sur la couche protectrice.

De façon préférée, l'épaisseur de la surcouche barrière est inférieure ou égale à 3 µm et de façon encore plus préférée, elle est inférieure ou égale à 1µm. L'épaisseur de la surcouche est avantageusement aussi faible que possible. Cette surcouche est directement positionnée sur la couche de protection placée au dos du miroir c'est-à-dire sur la couche de peinture. De par sa constitution, étant donné que la peinture est un mélange de charges différentes par nature et par distribution granulométrique, la peinture présente à l'état microscopique une porosité naturelle. Cette porosité peut constituer des points d'entrée pour les éléments corrosifs et ainsi ouvrir des voies préférentielles de diffusion de ces espèces. La surcouche déposée sur la couche protectrice de peinture permet avantageusement de refermer la porosité de la couche de peinture et ainsi de limiter voire supprimer des voies de diffusions d'espèces corrosives. La durabilité des miroirs comprenant la surcouche placée sur la couche protectrice de peinture est ainsi nettement améliorée.

La surcouche barrière peut être une couche d'épaisseur uniforme. Son épaisseur est ainsi régulière et identique sur la totalité de la face arrière du miroir. On peut alors également parler de surcouche continue.

La surcouche barrière peut également être une couche discontinue, dont l'épaisseur peut ne pas être uniforme. Il est essentiel que cette surcouche bouche la porosité existante dans la couche protectrice de peinture, sans nécessairement avoir une épaisseur homogène.

La surcouche barrière est la couche la plus externe située au dos du miroir. Il s'agit de la couche en contact avec l'air ambiant. Cette surcouche est une résine. Préférentiellement, cette résine est organique. On citera par exemple les résines acryliques, vinyliques, polyuréthanes, polyesters, époxydiques, alkydes ou styrèniques. Le choix du matériau utilisé est guidé par le fait que ce type de résine appartient préférentiellement à la famille des polymères. Il n'est pas nécessaire que la surcouche donne au miroir une quelconque fonctionnalité chimique. Le rôle essentiel de la surcouche est de remplir les cavités poreuses qui peuvent exister dans la couche de protection en peinture. De façon préférée, la surcouche est à base d'une résine alkyde, acrylique, époxyde ou polyester. Avantageusement, la surcouche est à base d'une résine alkyde, acrylique ou polyester. Les résines peuvent être de même nature chimique que les liants organiques contenus dans les formulations de peinture. Il est ainsi possible de choisir une surcouche à base d'une résine identique aux liants contenus dans la couche protectrice de peinture, ce qui permet de s'assurer également d'une bonne compatibilité chimique entre les espèces contenues dans la couche protectrice en peinture et dans la surcouche.

La peinture utilisée pour former la couche protectrice est une peinture aqueuse ou organique. L'épaisseur de cette couche protectrice est d'au plus 100 µm. De façon préférée, elle est d'au plus 50 µm. Son épaisseur pourra varier en fonction du type de peinture utilisée. Le rôle de cette couche protectrice est essentiellement un rôle optique et mécanique. Elle participe également à améliorer la durabilité du miroir par rapport aux agressions chimiques et corrosives. Il est possible d'utiliser des peintures à bas coût dont la fonction essentielle est d'assurer l'opacité recherchée en face arrière du miroir. Dans un souci de respect des normes EHS et en particulier de la directive européenne 2004/ 42/ CE « Decopaint», il est conseillé d'utiliser des peintures contenant moins de 130g/ L de solvants organiques, limitant ainsi l'émission de composés organiques volatils (COV) sur le lieu de fabrication.

Le substrat transparent est une feuille de verre minéral bombée ou non. Son épaisseur varie entre 2 et 8 mm. Le verre est de préférence extra-clair, c'est-à-dire présentant une transmission lumineuse supérieure à 85% voire supérieure à 89%pour une épaisseur de 3,2 mm. L'ensemble des couches constituant le miroir est déposé sur un même côté du substrat transparent, la surcouche étant la couche la plus externe de l'empilement.

La couche réfléchissante métallique, de préférence en argent, a une épaisseur variant entre 500 et 1600 mg/ m². Pour des applications en tant que miroirs domestiques, comme par exemple les miroirs de salle de bain, une couche d'argent classique a une épaisseur de 700 à 1000 mg/ m².

La couche réfléchissante peut également être en aluminium pour des applications en tant que miroirs domestiques.

Afin d'améliorer l'adhésion des différentes couches entre elles et/ou au substrat, le miroir peut comprendre une couche de primaire d'accrochage, classiquement à base de silane. Cette couche peut être déposée entre la couche métallique réfléchissante et la couche protectrice en peinture, entre le substrat et la couche métallique réfléchissante, ou éventuellement entre la couche de peinture et la surcouche barrière. Dans le cas où un primaire d'adhésion est déposé sur la couche de peinture pour améliorer l'adhésion de la surcouche, on considère toujours que la surcouche barrière aux éléments corrosifs est située directement sur la couche protectrice à base de peinture. En effet, la couche de primaire d'adhésion est une couche très fine, très souvent monoatomique, qui ne permet pas nécessairement à elle seule de refermer la porosité de la couche de peinture.

La présente invention porte également sur le procédé de fabrication du miroir décrit ci-dessus.

Le procédé de fabrication dudit miroir comprend:
a. une étape optionnelle de sensibilisation,
b. une étape optionnelle d'activation de la surface du substrat à revêtir,
c. une étape de dépôt d'au moins une couche métallique réfléchissante sur un substrat transparent,
d. une étape de dépôt d'au moins une couche protectrice de peinture,
e. une étape de dépôt d'une surcouche barrière aux espèces corrosives, telles que les sulfures et les chlorures, d'une épaisseur inférieure à 6 µm sur ladite couche de protection permettant de boucher la porosité de celle-ci et
f. une étape de séchage de ladite surcouche.

Comme connu de l'homme de l'art, la fabrication d'un miroir comprend plusieurs étapes avant le dépôt de la couche réfléchissante métallique : on réalise un avivage de la surface du substrat, puis une sensibilisation d'une de ses faces, par exemple par une solution de chlorure stanneux. Il est ensuite possible d'activer cette même face par une solution de chlorure de palladium. Ces étapes sont optionnelles dans le procédé de fabrication selon la présente invention.

On effectue alors le dépôt de la couche métallique réfléchissante, comme l'argent, par des techniques connues de l'homme du métier. Le dépôt peut être effectué en phase vapeur, notamment par CVD, PVD ou magnétron, ou par voie liquide notamment à partir d'une solution d'argenture.

Le procédé de fabrication d'un miroir selon la présente invention comprend une étape optionnelle de sensibilisation, une étape optionnelle d'activation de la surface du substrat à revêtir, une étape de dépôt de la couche métallique réfléchissante et une étape de dépôt de la couche protectrice de peinture. Il comprend en outre une étape de dépôt d'une surcouche barrière aux espèces corrosives, telles que les sulfures et les chlorures, d'une épaisseur inférieure à 6 µm sur ladite couche de protection permettant de refermer la porosité de surface de celle-ci puis une étape de séchage de ladite surcouche.

La couche protectrice de peinture peut être appliquée par différentes techniques: on mentionnera par exemple les techniques de pulvérisation, la technique du rideau, du tire-film, ou du rouleau. Les températures et temps de séchage de la couche de peinture sont variables en fonction du type de peinture utilisé et de l'épaisseur de la couche de peinture. Le séchage peut être effectué sous air chaud, ou bien par cuisson IR. Si la peinture est réticulable aux UV, l'étape de séchage peut être réalisée sous des lampes UV. Il est également possible de combiner ces différentes méthodes de séchage et de réaliser l'étape de séchage sous des lampes UV avec air chaud et cuisson IR

L'étape de dépôt de la surcouche barrière est effectuée par voie liquide par pulvérisation, au rouleau, par trempage, par enduction au rideau ou par aspersion. Cette étape de dépôt peut également être réalisée par sérigraphie. Le dépôt est effectué par des méthodes connues de l'homme de l'art. Il est parfois nécessaire que l'étape de dépôt soit suivie d'une étape d'essorage ou de râclage permettant de retirer le surplus de matière qui pourrait avoir été déposé lors de l'étape de dépôt de la surcouche. L'étape de dépôt peut également être suivie d'un passage sous couteau d'air pour retirer tout surplus de matière. En effet, la surcouche barrière doit être la plus fine possible et a de préférence une épaisseur inférieure à 3µm et encore plus préférentiellement inférieure à 1µm. Elle permet d'augmenter la compacité de la couche protectrice en peinture en refermant sa porosité ouverte.

Ainsi, lorsque l'étape de dépôt de la surcouche est réalisée par pulvérisation ou par enduction au rideau, elle est suivie d'une étape de raclage de sorte à obtenir une surcouche la plus fine possible.

Selon certains modes de réalisation, les étapes de dépôt et de raclage peuvent être réalisées de façon simultanée, en utilisant un rouleau dont le sens de rotation peut varier.

Le procédé selon l'invention comprend en outre une étape de séchage de la surcouche barrière qui peut être effectuée sous air chaud, par cuisson IR et/ou UV. Le choix du mode de séchage se fait de façon préférentielle en fonction du type de résine organique utilisée. Par exemple, si la surcouche barrière est à base d'une résine qui est réticulable aux UV, l'étape de séchage peut être réalisée sous des lampes UV.

Chacune des étapes c) d) et/ou e) peut être précédée d'une étape optionnelle de dépôt d'un primaire d'adhésion, par exemple du type silane, par toute technique connue de l'homme de l'art.

La présente invention porte également sur l'utilisation d'un miroir tel que décrit précédemment ou fabriqué selon le procédé de fabrication de la présente invention en tant que miroir d'intérieur.

Les exemples ci-dessous illustrent l'invention sans en limiter la portée.

### Exemples

Des échantillons ont été préparés et différents tests ont été effectués sur ces échantillons pour vérifier leur durabilité. Un test a été mis au point pour évaluer la résistance de la couche barrière et de la couche protectrice en peinture à la diffusion des composés soufrés. Pour effectuer ce test, on analyse le pourcentage de réflexion lumineuse en fonction du temps sur des échantillons dont la couche à analyser est recouverte de caoutchouc. Les échantillons sur lesquels le caoutchouc est posé sont placés dans une étuve à 130°C pour accélérer le processus de diffusion des composés soufrés contenus dans le caoutchouc. Des mesures de réflexion lumineuse sont ensuite effectuées après 60 et 180 minutes, et le pourcentage de perte de réflexion lumineuse est estimé par rapport à une valeur mesurée à T=0 (avant le positionnement du caoutchouc).

Des tests de corrosion ont été réalisés selon la norme EN ISO 9227.

Les mesures d'épaisseur de couches sont réalisées par des méthodes de mesure par coupe micrométrique (appareillage Paint Borer 518 de la société Erichsen). Les épaisseurs de résine déposées ont été mesurées sur un profilomètre 2D/3D Taylor Hobson.

Des mesures d'adhérence des couches sont déterminées par l'appareil de quadrillage automatisé de la société Erichsen (type 430), et correspondent au test de quadrillage décrit dans la norme NF ISO 2409 sur les peintures et vernis. Ce test consiste à réaliser une interprétation visuelle de la surface du quadrillage sur laquelle un écaillage peut se produire avec un peigne de 1 mm. La classification se fait sur une échelle de 0 à 5 selon que la couche se détache plus ou moins. Une valeur de 0 indique une très bonne adhésion de la couche.

Différents miroirs d'une taille 400mmx300mm ont été préparés en déposant une couche réfléchissante métallique en argent d'une épaisseur d'environ 750 mg/ m² sur un substrat en verre du type PLANILUX®, après une étape de sensibilisation du substrat à l'aide d'une solution à base de SnCl₂. Les miroirs comprennent une couche de passivation à l'étain déposée par voie liquide, d'une épaisseur d'une dizaine de nanomètreset une couche de primaire d'accrochage à base de silane d'une épaisseur d'environ 10 nm située entre la couche métallique réfléchissante en argent et la couche de protectrice en peinture.

Plusieurs échantillons ont été ainsi préparés en changeant les peintures utilisées pour la couche protectrice :
- peinture 1 : peinture organique de type alkyde (One Coat LF3 Grey commercialisée par Fenzi).
- peinture 2 : peinture acrylique aqueuse (WBLF4 LPB Blue 3025 commercialisée par Fenzi).

Deux résines différentes ont été testées pour former la surcouche barrière :
- résine A : résine acrylate (G1000UV commercialisée par Henkel)
- résine B : Résine alkyde mélamine correspondant au liant de la peinture One Coat LF3 Grey commercialisée par Fenzi)

Les résines sont appliquées au tire-film puis sont râclées. La résine B est séchée en étant placée dans une étuve à 180°C pendant 15 minutes pour permettre sa réticulation. La résine A est réticulée sous UV pendant 90 secondes (120 W/ cm)

Les performances en corrosion sulfurante des différents échantillons ont été évaluées dans des étuves à 130°C. Le tableau 1 ci-dessous récapitule les pourcentages de perte de réflexion lumineuse des différents échantillons testés à 60 minutes et à 180 minutes.

**Tableau 1**

| Echantillon | %de perte de réflexion lumineuse à 60 min | % de perte de réflexion lumineuse à 180 min |
|---|---|---|
| Miroir 1 (non conforme): 20 µm peinture 1 | 83 | 83 |
| Miroir 2 selon l'invention : 20 µm de peinture 1 recouvert de 1 µm de résine A | 51 | 80 |
| Miroir 3 selon l'invention : 20 µm de peinture 1 recouvert de 2 µm de résine B | 54 | 80 |
| Miroir 4 (non conforme à l'invention) 20 µm de peinture 2 | >80 | >80 |
| Miroir 5 (selon l'invention) 20 µm de peinture 2 recouvert de 6 µm de résine A | 1 | 1 |

En comparant respectivement le miroir 1 avec les miroirs 2 et 3, puis le miroir 4 avec le miroir 5, on constate que, après 60 min, le pourcentage de diminution est nettement moins important pour les miroirs selon la présente invention que pour les miroirs non conformes à l'invention. Au bout de 180 min, les valeurs obtenues pour les miroirs de l'invention sont inférieures à celles des miroirs comparatifs. Ceci montre l'effet bénéfique de la surcouche barrière sur la résistance à la corrosion sulfurante.

Le tableau 2 récapitule les résultats obtenus pour les différents miroirs après un cycle au CASS test (120 h à 50°C, solution aqueuse de 50g/ L de NaCl et 0.26g/ L de CuCl2 anhydre, le pH étant compris entre 3.2 et 3.3).

**Tableau 2**

| Echant illon | Corrosion aux bords (µm) | Corrosion pleine face |
|---|---|---|
| Miroir 1 (non conforme): 20 µm peinture 1 | très forte | Très forte |
| Miroir 2 selon l'invention : 20 µm de peinture 1 recouvert de 1 µm de résine A | 200 | Très légère |
| Miroir 3 selon l'invention : 20 µm de peinture 1 recouvert de 2µm de résine B | 113 | moyenne |
| Miroir 4 (non conforme à l'invention) 20 µm de peinture 2 | 750 | moyenne |
| Miroir 5 (selon l'invention) 20 µm de peinture 2 recouvert de 6 µm de résine A | 300 | Très légère |

Les résultats obtenus lors des tests CASS montrent que la corrosion est nettement améliorée lorsqu'on applique sur la couche protectrice en peinture une surcouche barrière de faible épaisseur. En effet, la taille de la zone attaquée sur les bords du miroir diminue lorsqu'on dépose la surcouche barrière. La corrosion pleine face est également améliorée et devient très légère ou moyenne pour les miroirs selon l'invention.

Des mesures d'adhérence effectuées au test du quadrillage pour chacun des échantillons ont montré que les valeurs obtenues étaient de 0 pour tous les miroirs selon l'invention. La couche de surcouche barrière adhère donc de façon satisfaisante aux couches protectrices de peinture. Pour répondre aux spécifications imposées par la norme ISO 2409, les miroirs doivent avoir une note inférieure à 2 au test d'adhésion.

L'ensemble de ces mesures montre une nette amélioration de la durabilité des miroirs selon la présente invention.

## Revendications

1. Miroir comprenant un substrat transparent en verre, au moins une couche réfléchissante métallique et au moins une couche protectrice en peinture au dos du miroir, **caractérisé en ce qu'**il comprend une surcouche barrière aux éléments corrosifs, tels que les sulfures et/ou les chlorures d'une épaisseur inférieure ou égale à 6 µm et située sur la couche protectrice, ladite surcouche étant une résine acrylique, vinylique, polyuréthane, polyester, alkyde ou styrènique.

2. Miroir selon la revendication 1 **caractérisé en ce que** la surcouche a une épaisseur inférieure ou égale à 3µm, de préférence inférieure ou égale à 1µm.

3. Miroir selon l'une des revendications précédentes **caractérisé en ce que** la surcouche est la couche externe du miroir, située au dos du miroir.

4. Miroir selon l'une des revendications précédentes **caractérisé en ce que** la surcouche est une couche d'épaisseur uniforme.

5. Miroir selon l'une des revendications 1 à 4 **caractérisé en ce que** la surcouche est une couche discontinue.

6. Miroir selon l'une des revendications précédentes **caractérisé en ce que** la couche protectrice est une couche de peinture, aqueuse ou organique.

7. Miroir selon l'une des revendications précédentes **caractérisé en ce que** l'épaisseur de la couche protectrice est d'au plus 100 µm, de préférence d'au plus 50 µm.

8. Miroir selon l'une des revendications précédentes **caractérisé en ce que** la couche réfléchissante métallique est une couche en argent.

9. Procédé de fabrication d'un miroir **caractérisé en ce qu'**il comprend:
a. une étape optionnelle de sensibilisation,
b. une étape optionnelle d'activation de la surface du substrat à revêtir,
c. une étape de dépôt d'au moins une couche métallique réfléchissante sur un substrat transparent en verre,
d. une étape de dépôt d'au moins une couche de protection,
e. une étape de dépôt d'une surcouche barrière aux espèces corrosives telles que les sulfures et/ou les chlorures d'une épaisseur inférieure à 6 µm, sur ladite couche de protection permettant de boucher la porosité de celle-ci, ladite surcouche étant une résine acrylique, vinylique, polyuréthane, polyester, alkyde ou styrènique et
f. une étape de séchage de ladite surcouche.

10. Procédé selon la revendication 9 **caractérisé en ce que** l'étape de dépôt de surcouche est effectuée par voie liquide par pulvérisation, au rouleau, par trempage, par enduction au rideau ou par aspersion, ou par des techniques de sérigraphie.

11. Procédé selon la revendication 10 **caractérisé en ce que** l'étape de dépôt de la surcouche est réalisée par pulvérisation, ou par enduction au rideau et est suivie d'une étape de raclage de sorte à obtenir une surcouche la plus fine possible.

12. Procédé selon la revendication 10 **caractérisé en ce que** l'étape de dépôt de la surcouche est réalisée avec un rouleau permettant de réaliser simultanément une étape de raclage par rotation du rouleau en sens inverse, de sorte à obtenir une surcouche la plus fine possible.

13. Procédé selon l'une des revendications 9 à 12 **caractérisé en ce que** l'étape de séchage est effectuée sous air chaud, par cuisson IR et/ou UV.

14. Utilisation du miroir selon l'une des revendications 1 à 8 ou fabriqué selon l'une des revendications 9 à 13 en tant que miroir d'intérieur.

## Patentansprüche

1. Spiegel, umfassend ein transparentes Substrat aus Glas, mindestens eine reflektierende Metallschicht und mindestens eine Schutzschicht aus Anstrichstoff auf der Rückseite des Spiegels, **dadurch gekennzeichnet, dass** er eine Deckschicht als Barriere gegen korrosive Elemente wie Sulfide und/oder Chloride umfasst, die eine Dicke von weniger als oder gleich 6 µm hat und auf der Schutzschicht befindlich ist, wobei die Deckschicht ein Acryl-, Vinyl-, Polyurethan-, Polyester-, Alkyd- oder Styrolharz ist.

2. Spiegel nach Anspruch 1, **dadurch gekennzeichnet, dass** die Deckschicht eine Dicke von weniger als oder gleich 3 µm, bevorzugt von weniger als oder gleich 1 µm, hat.

3. Spiegel nach einem der vorhergehenden Ansprüche, **dadurch gekennzeichnet, dass** die Deckschicht die äußere Schicht des Spiegels ist, die auf der Rückseite des Spiegels befindlich ist.

4. Spiegel nach einem der vorhergehenden Ansprüche, **dadurch gekennzeichnet, dass** die Deckschicht eine Schicht von einheitlicher Dicke ist.

5. Spiegel nach einem der Ansprüche 1 bis 4, **dadurch gekennzeichnet, dass** die Deckschicht eine diskontinuierliche Schicht ist.

6. Spiegel nach einem der vorhergehenden Ansprüche, **dadurch gekennzeichnet, dass** die Schutzschicht eine Schicht aus wasserhaltigem oder organischem Anstrichstoff ist.

7. Spiegel nach einem der vorhergehenden Ansprüche, **dadurch gekennzeichnet, dass** die Dicke der Schutzschicht höchstens 100 µm, bevorzugt höchstens 50 µm, beträgt.

8. Spiegel nach einem der vorhergehenden Ansprüche, **dadurch gekennzeichnet, dass** die reflektierende Metallschicht eine Silberschicht ist.

9. Verfahren zur Herstellung eines Spiegels, **dadurch gekennzeichnet, dass** es umfasst:
a. einen optionalen Schritt der Sensibilisierung,
b. einen optionalen Schritt der Aktivierung der Oberfläche des zu beschichtenden Substrats,
c. einen Schritt des Aufbringens mindestens einer reflektierenden Metallschicht auf ein transparentes Substrat aus Glas,
d. einen Schritt des Aufbringens mindestens einer Schutzschicht,
e. einen Schritt des Aufbringens einer Deckschicht als Barriere gegen korrosive Elemente wie Sulfide und/oder Chloride mit einer Dicke von weniger als 6 µm auf die Schutzschicht, die es ermöglicht, deren Porosität aufzufüllen, wobei die Deckschicht ein Acryl-, Vinyl-, Polyurethan-, Polyester-, Alkyd- oder Styrolharz ist, und
f. einen Schritt des Trocknens der Deckschicht.

10. Verfahren nach Anspruch 9, **dadurch gekennzeichnet, dass** der Schritt des Aufbringens der Deckschicht auf flüssigem Weg durch Zerstäuben, mit der Walze, durch Tauchbeschichten, durch Vorhangbeschichten oder durch Besprühen oder mit Siebdrucktechniken erfolgt.

11. Verfahren nach Anspruch 10, **dadurch gekennzeichnet, dass** der Schritt des Aufbringens der Deckschicht durch Zerstäuben oder durch Vorhangbeschichten ausgeführt wird und sich daran ein Schritt des Abstreifens anschließt, so dass eine möglichst dünne Deckschicht erhalten wird.

12. Verfahren nach Anspruch 10, **dadurch gekennzeichnet, dass** der Schritt des Aufbringens der Deckschicht mit einer Walze ausgeführt wird, was es ermöglicht, gleichzeitig einen Schritt des Abstreifens durch Drehen der Walze in Gegenrichtung auszuführen, so dass eine möglichst dünne Deckschicht erhalten wird.

13. Verfahren nach einem der Ansprüche 9 bis 12, **dadurch gekennzeichnet, dass** der Schritt des Trocknens unter Warmluft, durch IR-Härtung und/oder UV-Härtung erfolgt.

14. Verwendung des Spiegels nach einem der Ansprüche 1 bis 8 oder hergestellt nach einem der Ansprüche 9 bis 13 als Innenspiegel.

## Claims

1. A mirror comprising a transparent glass substrate, at least one metallic reflecting layer and at least one protective paint layer on the back of the mirror, **characterized in that** it comprises an overlayer which is a barrier to corrosive elements, such as sulfides and/or chlorides, with a thickness of less than or equal to 6 µm which is located on the protective layer, said overlayer being an acrylic, vinyl, polyurethane, polyester, alkyd or styrene resin..

2. The mirror as claimed in claim 1, **characterized in that** the overlayer has a thickness of less than or equal to 3 µm, preferably of less than or equal to 1 µm.

3. The mirror as claimed in either of the preceding claims, **characterized in that** the overlayer is the external layer of the mirror, located on the back of the mirror.

4. The mirror as claimed in one of the preceding claims, **characterized in that** the overlayer is a layer of uniform thickness.

5. The mirror as claimed in one of claims 1 to 4, **characterized in that** the overlayer is a noncontinuous layer.

6. The mirror as claimed in one of the preceding claims, **characterized in that** the protective layer is a layer of water-based or organic paint.

7. The mirror as claimed in one of the preceding claims, **characterized in that** the thickness of the protective layer is at most 100 µm, preferably at most 50 µm.

8. The mirror as claimed in one of the preceding claims, **characterized in that** the metallic reflecting layer is a silver layer.

9. A process for the manufacture of a mirror, **characterized in that** it comprises:
a. an optional stage of sensitization,
b. an optional stage of activation of the surface of the substrate to be coated,
c. a stage of deposition of at least one metallic reflecting layer on a transparent glass substrate,
d. a stage of deposition of at least one protective layer,
e. a stage of deposition of an overlayer which is a barrier to corrosive entities, such as sulfides and chlorides, with a thickness of less than 6 µm, on said protective layer, making it possible to block the porosity of the latter, said overlayer being an acrylic, vinyl, polyurethane, polyester, alkyd or styrene resin and
f. a stage of drying said overlayer.

10. The process as claimed in claim 9, **characterized in that** the stage of deposition of overlayer is carried out by the liquid route by spraying, with a roller, by dip-coating, by curtain coating or by sprinkling, or by screen printing techniques.

11. The process as claimed in claim 10, **characterized in that** the stage of deposition of the overlayer is carried out by spraying or by curtain coating and is followed by a scraping stage, so as to obtain the thinnest possible overlayer.

12. The process as claimed in claim 10, **characterized in that** the stage of deposition of the overlayer is carried out with a roller which makes it possible to simultaneously carry out a scraping stage by rotation of the roller in the reverse direction, so as to obtain the thinnest possible overlayer.

13. The process as claimed in one of claims 9 to 12, **characterized in that** the drying stage is carried out under hot air, by IR curing and/or by UV curing.

14. The use of the mirror as claimed in one of claims 1 to 8 or manufactured as claimed in one of claims 9 to 13 as indoor mirror.
